# EUROPÄISCHE PATENTSCHRIFT

(11) **EP 3 218 999 B1**
(45) Veröffentlichungstag und Bekanntmachung des Hinweises auf die Patenterteilung: **19.05.2021**
(21) Anmeldenummer: 15804712.6
(22) Anmeldetag: 27.11.2015
(51) Int. Cl.: B63H 21/17

(54) **KÜHLEINRICHTUNG EINES ELEKTRISCHEN BETRIEBSMITTELS**
COOLING APPARATUS FOR ELECTRICAL EQUIPMENT
DISPOSITIF DE REFROIDISSEMENT POUR UN MOYEN DE FONCTIONNEMENT ÉLECTRIQUE

(30) Priorität: 30.12.2014 DE 102014227038
(43) Veröffentlichungstag der Anmeldung: 20.09.2017
(73) Patentinhaber: Siemens Energy Global GmbH & Co. KG, 81739 München (DE)
(72) Erfinder: ARNOLDT, Jens, 22177 Hamburg (DE); DEEG, Markus, 21680 Stade (DE); GRAEFF, Sven-Olaf, 23968 Wismar (DE); HELLEMANN, Oscar, 21629 Neu Wulmstorf (DE); STUTZ, Sophie Juliane, 22111 Hamburg (DE)
(86) Internationale Anmeldenummer: PCT/EP2015/077879
(87) Internationale Veröffentlichungsnummer: WO 2016/107709

(56) Entgegenhaltungen:
- WO-A1-2014/160310
- DE-A1-102012 020 958
- DE-U1-202005 001 682
- JP-A- H02 246 255
- US-B2- 7 018 249

## Beschreibung

Die Erfindung betrifft ein Wasserfahrzeug mit einer Kühleinrichtung eines elektrischen Betriebsmittels. Das elektrische Betriebsmittel ist insbesondere ein Mittel zum Antrieb eines Wasserfahrzeuges.

Zur Kühlung elektrischer Betriebsmittel wird beispielsweise ein gasförmiges Medium wie Luft oder ein flüssiges Medium wie Wasser verwendet. Die Kühlung kann direkt erfolgen oder indirekt über einen Wärmetauscher. Dies betrifft auch eine Kühlung eines elektrischen Antriebs eines Wasserfahrzeuges. Das Wasserfahrzeug ist beispielsweise ein Überwasserfahrzeug wie ein Schiff, ein Boot, etc. oder ein Unterwasserfahrzeug wie ein Unterseeboot. Das Wasserfahrzeug weist beispielsweise einen azimutierenden elektrischen Antrieb auf. Zur Kühlung kann ein ein- oder mehrstufiger Wärmetauscher verwendet werden. Die Kühlung betrifft dabei beispielsweise einen Stromrichter oder einen elektrischen Motor bzw. Generator. Dies sind elektrische Betriebsmittel. Als Wärmetauscher kann beispielsweise ein Öl-Wasser-Wärmetauscher, ein Wasser-Wasser-Wärmetauscher oder ein Öl-Luft-Wärmetauscher zum Einsatz kommen. US 7 018 249 B2 offenbart ein Wasserfahrzeug gemäß dem Oberbegriff des Anspruchs 1.

Mittels einer effizienten Kühlung ist ein effizienter Einsatz des elektrischen Betriebsmittels möglich. Eine Aufgabe der Erfindung ist es die Effizienz der Kühlung zu verbessern.

Eine Lösung der Aufgabe gelingt bei einem Wasserfahrzeug mit einer Kühleinrichtung nach Anspruch 1- und bei einem Verfahren zur Kühlung nach Anspruch 8. Ausgestaltungen ergeben sich nach den Ansprüchen 2 bis 7 und 9 bis 11.

Bei einem Wasserfahrzeug ist eine Kühleinrichtung eines elektrischen Betriebsmittels vorgesehen, wobei ein Kühlkreislauf vorgesehen ist, welcher thermisch mit dem elektrischen Betriebsmittel gekoppelt ist. Die thermische Kopplung erfolgt dabei beispielsweise direkt oder indirekt. Der Kühlkreislauf ist zur Beschickung mit einem Eisbrei vorgesehen. In einem Kühlbetrieb des elektrischen Betriebsmittels weist der Kühlkreislauf den Eisbrei auf. Das elektrische Betriebsmittel ist beispielsweise ein Motor oder ein Generator, aber z.B. auch ein Stromrichter für den Motor bzw. den Generator. Der Motor bzw. der Generator sind eine dynamoelektrische Maschine, welche z.B. zum Antrieb eines Wasserfahrzeuges vorgesehen sind, oder auch zur Speisung eines Bordnetzes des Wasserfahrzeuges. Das Wasserfahrzeug ist beispielsweise ein Tanker, ein Kreuzfahrtschiff, eine Fähre, Unterwasserseeboot oder dergleichen. Der Eisbrei wird auch als Ice-Slurry bezeichnet kann zu einer effizienten und/oder platzsparenden Kühlung eines oder mehrerer elektrischer Betriebsmittel eingesetzt werden. Dies betrifft den Antrieb eines Wasserfahrzeuges, welcher sich insbesondere in einer Gondel befindet. Ein derartiger Gondelantrieb wird auch als Pod-Antrieb bezeichnet. Zur Kühlung des elektrischen Betriebsmittels ist beispielsweise ein erster Kühlkreislauf vorgesehen. Dieser erste Kühlkreislauf kann Eisbrei aufweisen. Der erste Kühlkreislauf kann thermisch mit einem zweiten Kühlkreislauf gekoppelt sein. Auch der zweite Kühlkreislauf kann Eisbrei aufweisen. Gibt es zwei Kühlkreisläufe, wobei der erste Kühlkreislauf mit dem zweiten thermisch gekoppelt ist, so ergibt sich eine indirekte Kühlung. Weist der zweite Kühlkreislauf z.B. Eisbrei auf, so kann der erste Kühlkreislauf ein Medium wie Luft oder eine Flüssigkeit mit bzw. ohne Eisbrei aufweisen. Der erste Kühlkreislauf kann thermisch direkt mit dem elektrischen Betriebsmittel gekoppelt sein.

Der Eisbrei ist insbesondere eine Mischung aus kleinen Eispartikeln (z.B. 0,01-0,5 mm im Durchmesser), Wasser und ggf. einem den Gefrierpunkt senkenden Stoff wie Ethanol, Salz, Glykol oder dergleichen. Anders als bei Kühlmedien mit einer Mischung von Wasser und Gefrierschutzmittel als einphasiger Kälteträger handelt es sich bei Eisbrei um einen zweiphasiger Kälteträger. Dabei ist die Entstehung und das Vorhandensein von Eispartikeln gewollt. Je größer die Eispartikel sind (z.B. größer 5mm), desto weniger handelt es sich um Eisbrei, sondern vielmehr um Scherbeneis. Der Eisbrei kann als ein flüssiges Kühlmedium verwendet werden. Dabei kann die Energiebilanz beim Phasenübergang zwischen Eis und Flüssigkeit ausgenutzt werden. Der Eisbrei kann in der Verwendung als Kühlmittel, welches auch mit Eisanteil gut pumpbar ist, eine oder mehrere der folgenden Eigenschaften aufweisen:
- eine hohe spezifische Wärmekapazität;
- eine große spezifische Schmelzenthalpie;
- einen großen Wärmeübergangskoeffizient und
- eine gute Umweltverträglichkeit insbesondere bei der Verwendung von Kochsalz und/oder Ethanol.

Durch die hohe Wärmekapazität des Eisbreis ist es beispielsweise möglich die Strömungsgeschwindigkeit des Kühlmediums im Kühlkreislauf zu reduzieren. Damit kann erreicht werden die Pumpenleistung zur Förderung des Kühlmediums, also des Eisbreis, zu reduzieren. Dies ist nicht nur effizienzsteigernd, sondern führt auch zu einer geringeren Geräuscherzeugung durch die Kühleinrichtung, da sich die Strömungsgeschwindigkeit reduziert und die Pumpe für das Kühlmedium nicht so schnell laufen muss.

Wir beispielsweise anstelle eines konventionellen rein Flüssigen Kühlmediums ohne die Möglichkeit einer Änderung der Phase der Eisbrei verwendet, so kann sich daraus eine Erhöhung der Leistung des elektrischen Betriebsmittels erzielen lassen. Dies ist vorteilhaft durch wenige oder auch keine Modifikationen an der Kühleinrichtung möglich.

Durch die Verwendung des Eisbreis ist es beispielsweise nicht notwendig einen Speicher mit ortsfestem Eis zusammen mit einem Wärmeüberträger vorzusehen, da beim Eisbrei das Eis selbst als ein Teil des Kühlmediums direkt gepumpt wird. An der Stelle von Eisbrei kann auch Scherbeneis gepumpt werden. Der Vorteil von Eisbrei gegenüber Scherbeneis als ein Teil des Kühlmediums ist es, dass der Eisbrei schonender für das Kühlsystem ist. Dies betrifft beispielsweise die Pumpe für das Kühlmedium.

In einer Ausgestaltung der Kühleinrichtung ist der Kühlkreislauf mit einer Eisbreiquelle verbunden. Der Kühlkreislauf ist beispielsweise der Kühlkreislauf der an dem elektrischen Betriebsmittel angeschlossen ist. In einer weiteren Ausgestaltung ist es der Kühlkreislauf, welcher über einen Wärmetauscher mit dem primären Kühlkreislauf gekoppelt ist. Der primäre Kühlkreislauf ist am elektrischen Betriebsmittel angeschlossen.

In weiteren Ausgestaltungen der Kühleinrichtung ist die Eisbreiquelle ein Eisbreitank oder auch ein Eisbreierzeuger. Damit sich der Eisbrei nicht verfestigt ist dieser vorteilhaft in Bewegung zu halten. Im Kühlkreislauf kann dies durch das Pumpen des Eisbreis sichergestellt werden. Im Eisbreitank kann der Eisbrei vorteilhaft durch einen Mixer beweglich gehalten werden und ein Klumpen vermieden werden.

In einer Ausgestaltung der Kühleinrichtung weist der Kühlkreislauf einen Kühlkanal auf. Der Kühlkanal befindet sich vorteilhaft in oder an dem elektrischen Betriebsmittels. So kann beispielsweise der Stator einer dynamoelektrischen Maschine, also eines Motors oder Generators einen oder eine Vielzahl von Kühlkanälen aufweisen, durch welche Eisbrei führbar ist bzw. geführt (gepumpt) wird.

In einer Ausgestaltung der Kühleinrichtung ist der Kühlkreislauf mit einem primären Kühlkreislauf thermisch gekoppelt. Der primäre Kühlkreislauf ist dabei beispielsweise der erste Kühlkreislauf und der Kühlkreislauf, welcher den Eisbrei aufweist ist ein sekundärer Kühlkreislauf bzw. der zweite Kühlkreislauf. Der primäre Kühlkreislauf ist beispielsweise derart ausgestaltet, dass dieser einen Kühlkanal aufweist, welcher in das elektrische Betriebsmittel integriert ist. Vorteilhaft weist das elektrische Betriebsmittel eine Vielzahl von Kühlkanälen auf, welche in den primären Kühlkreislauf integriert sind. Die Integration erfolgt beispielsweise durch die Verwendung von Anschlüssen wie Flansche. Durch die Trennung des primären Kühlkreislaufes vom sekundären Kühlkreislauf ist es z.B. möglich die Kühlung über Eisbrei mit herkömmlichen Kühlkonzepten zu kombinieren, ohne dass eine Änderung am elektrischen Betriebsmittel notwendig ist.

In einer Ausgestaltung der Kühleinrichtung ist das elektrische Betriebsmittel eine dynamoelektrische Maschine. Die dynamoelektrische Maschine ist beispielsweise ein Antriebsmotor für ein Wasserfahrzeug wie ein Schiff, oder auch ein Generator für ein Wasserfahrzeug. Das elektrische Betriebsmittel kann aber auch ein elektrisches Betriebsmittel wie ein Stromrichter sein, welcher insbesondere mit einem Motor oder Generator elektrisch gekoppelt ist. Motor bzw. Generator können auch zusammen mit dem Stromrichter mittels der Kühleinrichtung gekühlt werden.

In einer Ausgestaltung der Kühleinrichtung ist ein Prozesskühler zur Erzeugung des Eisbreis vorgesehen, wobei der Prozesskühler thermisch mit einer Prozesseinrichtung gekoppelt ist. Der Prozesskühler ist ein Eisbreierzeuger. Die Prozesseinrichtung ist beispielsweise ein Klimaanlage oder eine Einrichtung zur Erzeugung von Eis. Eine Klimaanlage weist Mittel auf, welche zu Erzeugung niedriger Temperaturen geeignet sind. Diese Mittel der Klimaanlage zur Erzeugung niedriger Temperaturen können in einer Ausgestaltung auch zur Erzeugung des Eisbreis vorgesehen sein.

Ist die Kühleinrichtung in einem Wasserfahrzeug integriert so kann die Kühleinrichtung beispielsweise für den Fall, dass sich das Wasserfahrzeug in einem Hafen befindet von einer Kühleinrichtung im Hafen ergänzt bzw. ganz oder teilweise ersetzt. Eisbrei kann beispielsweise an Land erzeugt werden und zum Wasserfahrzeug gepumpt werden.

Ein Wasserfahrzeug ist also insbesondere derart ausgestaltet, dass dieses eine elektrische Maschine und eine Kühleinrichtung aufweist, wobei die Kühleinrichtung gemäß einer der beschriebenen Varianten ausgestaltet ist. Zur Kühlung der elektrischen Maschine ist diese mit der Kühleinrichtung thermisch gekoppelt, wobei die Kühleinrichtung ein Kühlmedium aufweist, welches sich in einer ersten Phase und in einer zweiten Phase in einem Kühlkreislauf befindet. Die erste Phase ist beispielsweise eine flüssige Phase und die zweite Phase ist beispielsweise eine feste Phase, wie z.B. eine Kristalline. Eisbrei weist insbesondere kristalline Strukturen wie Eiskristalle auf.

Bei einem Verfahren zur Kühlung eines elektrischen Betriebsmittels wird eine Kühleinrichtung der beschriebenen Art verwendet, wobei das elektrische Betriebsmittel ein elektrischer Motor, ein elektrischer Generator und/oder ein Stromrichter ist. Dabei kann beispielsweise ein Zustand des Eisbreis ermittelt werden. Der Zustand betrifft beispielsweise die Temperatur und/oder der Kristallisationsgrad und/oder die Zähigkeit. Abhängig vom Zustand kann die Kühlung des Eisbreis reduziert oder verstärkt werden.

Wird bei der Kühleinrichtung ein Eisbreitank verwendet, so kann beispielsweise gemäß des Verfahrens die Befüllung des Eisbreitanks ermittelt werden. Unterschreitet die Befüllung ein Minimum, so kann zusätzlicher Eisbrei erzeugt werden. Derart kann sichergestellt werden, dass für den Kühlkreislauf mit Eisbrei immer genügend Eisbrei vorhanden ist um auf verschieden starke Kühlanforderungen reagieren zu können. Abhängig vom Zustand bzw. Füllgrad des Tanks mit Eisbrei und/oder abhängig von einer benötigten Kühlleistung kann so ausreichend Eisbrei zur Bevorratung erzeugt werden.

Nachfolgend wird die Erfindung an Hand von Figuren beispielhaft beschrieben. Dabei zeigt:
- FIG 1: eine direkte Kühlung mit Eisbrei und
- FIG 2: eine indirekte Kühlung mit Eisbrei.

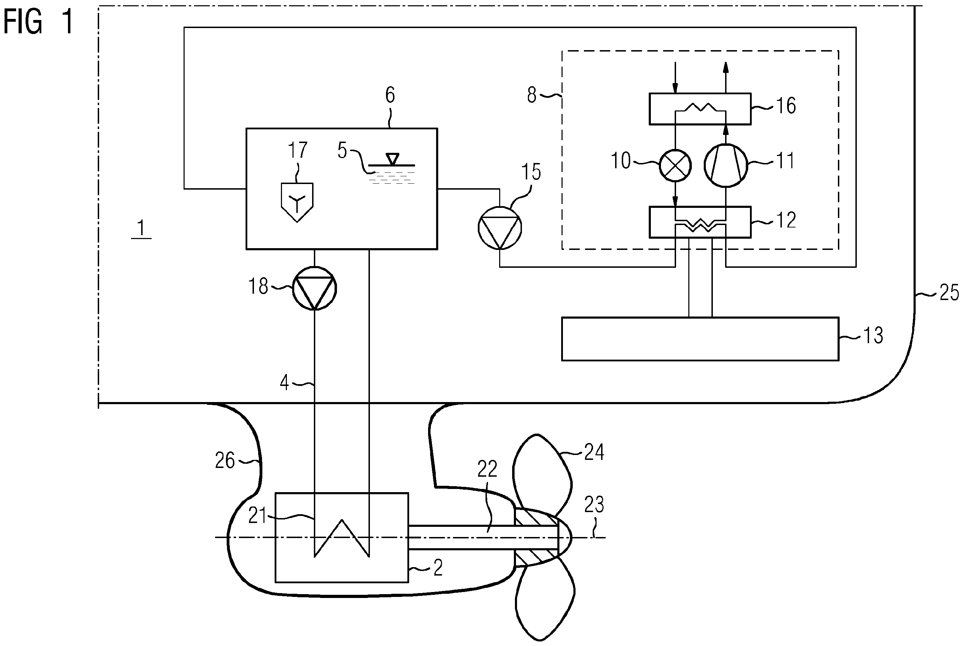

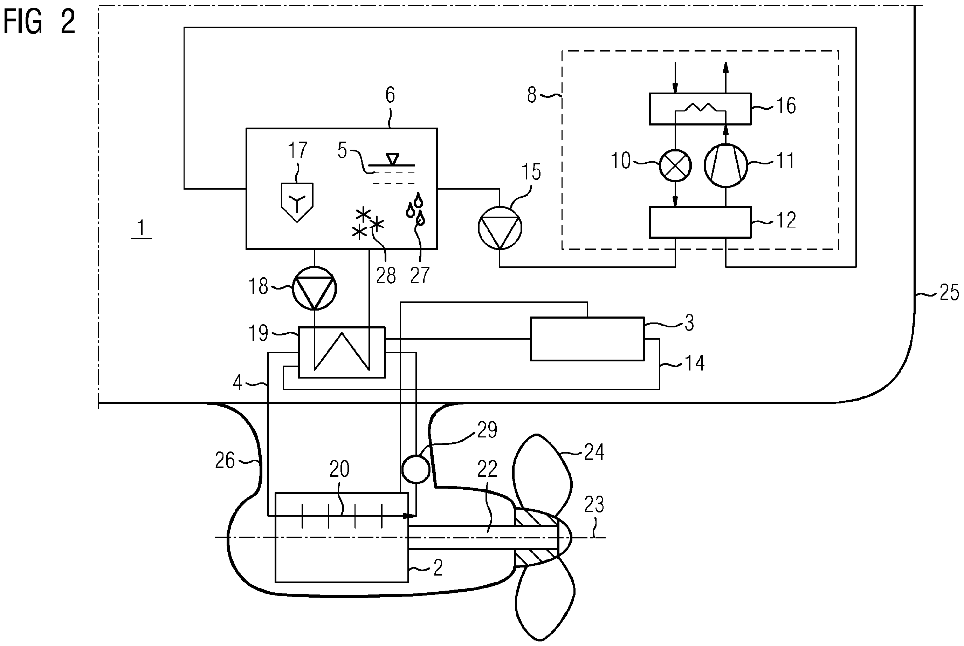

Die Darstellung nach Figur 1 zeigt eine Kühleinrichtung 1 in einem Schiff 25, welches symbolisch im Ausschnitt dargestellt ist. Dabei werden für gleichartige Elemente in den Figuren 1 und 2 gleiche Bezugszeichen verwendet. Die Kühleinrichtung 1 weist einen Eisbreitank 6 auf, in welchem sich Eisbrei 5 befindet, welcher über einen Mixer 17 daran gehindert wird zu verklumpen. Um einer Verfestigung durch Verbindung der Eiskristalle entgegenzuwirken, muss der Eisbrei immer in Bewegung gehalten werden. So sind Vorratsgefäße wie der Tank mit einer Rührvorrichtung, also einem Mixer, ausgestattet. Je tiefer die Anwendungstemperatur des Eisbreis ist, desto höher ist der erforderliche Anteil an Gefrierschutzmittel im Eisbrei zu halten.

Der Eisbreierzeuger 8 weist einen Verflüssiger 16, einen Verdampfer 12 sowie einen Verdichter 11 und ein Entspannungsventil 10 auf, welche miteinander gekoppelt sind. Im Verdampfer 12 befindet sich ein Wärmetauscher. Mittels einer Pumpe 15 kann Flüssigkeit und/oder Eisbrei vom Eisbreitank 6 über den Verdampfer 12 wieder zum Tank 6 gepumpt werden. Gegebenenfalls kann eine weitere Prozesseinrichtung 13 mit dem Verdampfer 12 gekoppelt werden. Die weitere Prozesseinrichtung 13 ist beispielsweise eine Klimaanlage.

Der Eisbrei 5 aus dem Eisbreitank 6 kann mittels einer Pumpe 18 in einen Wärmetauscher 21 gepumpt werden. Der Wärmetauscher 21 ist thermisch mit einem Motor 2 gekoppelt, welcher sich in einer Antriebsgondel 26 befindet. Mittels des Motors 2 läßt sich über eine Welle 22 mit einer Achse 23 ein Propeller 24 antreiben. Der Tank 6 bildet zusammen mit der Pumpe 18, dem Wärmetauscher 21 und einer Rückleitung zum Tank 6 einen Kühlkreislauf 4 aus. Der Kühlkreislauf 4 mit dem Eisbrei betrifft dirket die Kühlung des Motors, so dass es sich um eine direkte Kühlung handelt. Der Eisbrei wird beispielsweise durch abgedichtete Kanäle im Motor 2 geleitet. Die Kanäle befinden sich beispielsweise in einem Gehäuse des Motors 2 und/oder im Stator des Motors 2.

Die Darstellung nach Figur 2 zeigt eine indirekte Kühlung mittels Eisbrei 5. Der Eisbrei weist wie auch beim Beispiel nach Figur 1 eine erste flüssige Phase 27 und eine zweite Phase 29 Eis auf. Die Pumpe 18 ist für einen sekundären Kühlkreislauf vorgesehen, welcher den Eisbreitank 6, die Pumpe 18 und einen sekundären Wärmetauscher 19 aufweist. Mittels dieses Wärmetauschers kann über einen Kühlkreislauf 14 für einen Stromrichter 3 dieser Stromrichter 3 gekühlt werden. Dieser Kühlkreislauf für den Stromrichter 3 weist beispielsweise Luft oder Wasser als Kühlmedium auf, wobei eine Pumpe oder Lüfter hierfür nicht dargestellt ist.

Mittels eines primären Kühlkreislaufs 4, welcher mit dem Motor 2 direkt thermisch gekoppelt ist und Kühlkanäle 20 im Motor 2 aufweist, wird thermische Energie vom Motor 2 abgeführt. Der Kühlkreislauf mit der Eisbreipumpe 18 weist auch den Wärmetauscher 19 auf, welcher mit dem Eisbreitank 6 verbunden ist. Der Wärmetauscher 19 und der Eisbreitank 6 sind Teile des sekundären Kühlkreislaufs. Der primäre Kühlkreislauf 4 weist als Kühlmedium beispielsweise Luft oder Wasser auf. Bei Luft ist als eine Mediumpumpe 29 ein Lüfter vorgesehen und bei Wasser oder einer vergleichbaren Kühlflüssigkeit ist als Mediumpumpe 29 eine Flüssigkeitspumpe vorgesehen.

Die Kühlung mittels Eisbrei ist insbesondere zur Kühlung von azimutierenden elektrischen Antrieben für Wasserfahrzeuge vorgesehen. Der Eisbrei kann auch als Ice-Slurry bezeichnet werden. Das Kühlsystem ist derart ausbildbar, dass dieses zumindest drei Stufen aufweist. In der ersten Stufe wird der zu kühlende (also der zu entwärmende) Bereich mittels Ice-Slurry (Mischung aus z.B. Eis und Wasser) ganz oder teilweise durchströmt. Die ist also z.B. der Motor 2 nach Figur 1 oder der Wärmetauscher 19 nach Figur 2. Dabei wird die abzuführende Wärme zum Aufschmelzen des im Ice-Slurry befindlichen Eises verbraucht. Das Kühlmedium erhöht bei der Durchströmung des zu kühlenden Bereiches seine Temperatur dabei nicht. Das Ice-Slurry wird an einer Kältemaschine rückgekühlt. Die Kältemaschine ist beispielsweise der Eisbreierzeuger 8. Durch die Rückkühlung erhöht sich der Eisanteil im Ice-Slurry wieder. Die Kältemaschine führt die Wärme z.B. in Wasser oder Luft ab.

Ein Vorteil dieser Art der Kühlung besteht in einem konstant niedrigen Temperaturniveau des zentralen Kühlmediums, wodurch aufgrund des hierdurch höheren Temperaturgefälles im zu kühlenden Bereich eine höhere Effizienz des Kühlvorganges erreicht wird. Hierdurch sind höhere Wirkungsgrade, kompaktere Bauformen oder kostengünstigere Ausführungen der Anlagen bzw. der Antriebseinrichtung eines Wasserfahrzeuges möglich. Es ergibt sich vorteilhaft ein konstant niedriges Temperaturniveau des zentralen Kühlmediums mit dem Eisbrei, wodurch aufgrund des hierdurch höheren Temperaturgefälles im zu kühlenden Bereich eine höhere Effizienz des Kühlvorganges erreicht wird. Abhängig vom Einsatzgebiet der Kühleinrichtung sind unterschiedliche Varianten mit einer Vielzahl von Zwischenmedien möglich, wie dies aus dem Beispiel nach Figur 2 hervorgeht.

## Patentansprüche

1. Wasserfahrzeug (25) mit einer Antriebsgondel (26) und mit einer elektrischen Maschine (2,3), die sich in der Antriebsgondel (26) befindet, wobei eine Kühleinrichtung (1) zur Kühlung der elektrischen Maschine (2,3) mit dieser thermisch gekoppelt ist, wobei die Kühleinrichtung (1) ein Kühlmedium (5) aufweist, welches sich in einer ersten Phase (27) und in einer zweiten Phase (28) in einem Kühlkreislauf (4,14) befindet, **dadurch gekennzeichnet, dass** die erste Phase eine flüssige Phase und die zweite Phase eine feste Phase ist.

2. Wasserfahrzeug (25) nach Anspruch 1, wobei der Kühlkreislauf (4,14) zur Beschickung mit Eisbrei (5) vorgesehen ist.

3. Wasserfahrzeug (25) nach Anspruch 1 oder 2, wobei der Kühlkreislauf (4,14) einen Kühlkanal (9) des elektrischen Betriebsmittels (2,3) aufweist.

4. Wasserfahrzeug (25) nach einem der Ansprüche 1 bis 3, wobei der Kühlkreislauf (4,14) mit einem primären Kühlkreislauf (14) thermisch gekoppelt ist, und der primäre Kühlkreislauf (14) einen Kühlkanal (9) des elektrischen Betriebsmittels (2,3) aufweist.

5. Wasserfahrzeug (25) nach einem der Ansprüche 1 bis 4, wobei die Kühleinrichtung (1) zur Kühlung eines Stromrichters (3) vorgesehen ist.

6. Wasserfahrzeug (25) nach einem der Ansprüche 1 bis 5, wobei ein Eisbreierzeuger (8) zur Erzeugung des Eisbreis (5) vorgesehen ist, wobei der Eisbreierzeuger (8) thermisch mit einer Prozesseinrichtung (13) gekoppelt ist.

7. Wasserfahrzeug (25) Kühleinrichtung (1) nach einem der Ansprüche 1 bis 6, wobei eine Klimaanlage zur Erzeugung des Eisbreis (5) vorgesehen ist.

8. Verfahren zur Kühlung eines elektrischen Betriebsmittels (2,3) eines Wasserfahrzeugs (25), wobei eine Kühleinrichtung (1) verwendet wird, wobei das elektrische Betriebsmittel (2,3) ein elektrischer Motor (2) in einer Antriebsgondel (26), ein elektrischer Generator (2) und/oder ein Stromrichter (3) ist, **dadurch gekennzeichnet, dass** als Kühlmedium ein zweiphasiger, flüssiger Kälteträger verwendet wird, wobei die erste Phase eine flüssige Phase und die zweite Phase eine feste Phase ist.

9. Verfahren nach Anspruch 8, wobei als Kühlmedium Eisbrei (5) verwendet wird und ein Zustand des Eisbreis (5) ermitteltwird.

10. Verfahren nach Anspruch 8 oder 9, wobei die Befüllung eines Eisbreitanks (13) ermittelt wird.

11. Verfahren nach Anspruch 9 oder 10, wobei abhängig vom Zustand und abhängig von einer benötigten Kühlleistung Eisbrei (5) erzeugt wird.

## Claims

1. Watercraft (25) with a propulsion nacelle (26) and with an electric machine (2, 3), which is in the propulsion nacelle (26), wherein a cooling device (1) for cooling the electric machine (2, 3) is thermally coupled to it, wherein the cooling device (1) has a cooling medium (5), which is in a cooling circuit (4, 14) in a first phase (27) and in a second phase (28), **characterized in that** the first phase is a liquid phase and the second phase is a solid phase.

2. Watercraft (25) according to Claim 1, wherein the cooling circuit (4, 14) is intended for charging with ice slurry (5).

3. Watercraft (25) according to Claim 1 or 2, wherein the cooling circuit (4, 14) has a cooling channel (9) for the electrical equipment (2, 3).

4. Watercraft (25) according to one of Claims 1 to 3, wherein the cooling circuit (4, 14) is thermally coupled to a primary cooling circuit (14), and the primary cooling circuit (14) has a cooling channel (9) for the electrical equipment (2, 3).

5. Watercraft (25) according to one of Claims 1 to 4, wherein the cooling device (1) is intended for cooling a power converter (3).

6. Watercraft (25) according to one of Claims 1 to 5, wherein an ice slurry generator (8) is provided for generating the ice slurry (5), wherein the ice slurry generator (8) is thermally coupled to a process device (13).

7. Watercraft (25) with a cooling device (1) according to one of Claims 1 to 6, wherein air conditioning is used for generating the ice slurry (5).

8. Method for cooling electrical equipment (2, 3) of a watercraft (25), wherein a cooling device (1) is used, wherein the electrical equipment (2, 3) is an electric motor (2) in a propulsion nacelle (26), an electrical generator (2) and/or a power converter (3), **characterized in that** a two-phase, liquid refrigerant is used as the cooling medium, wherein the first phase is a liquid phase and the second phase is a solid phase.

9. Method according to Claim 8, wherein ice slurry (5) is used as the cooling medium and a state of the ice slurry (5) is determined.

10. Method according to Claim 8 or 9, wherein the filling of an ice slurry tank (13) is determined.

11. Method according to Claim 9 or 10, wherein, depending on the state and depending on a required cooling capacity, ice slurry (5) is generated.

## Revendications

1. Bâtiment (25) de navigation sur l'eau, ayant une nacelle (26) de propulsion et une machine (2, 3) électrique, qui se trouve dans la nacelle (26) de propulsion, dans lequel un dispositif (1) de refroidissement pour le refroidissement de la machine (2, 3) électrique est couplé thermiquement à celle-ci, dans lequel le dispositif (1) de refroidissement a un fluide (5) de refroidissement, qui se trouve dans un circuit (4, 14) de refroidissement en une première phase (27) et en une deuxième phase (28), **caractérisé en ce que** la première phase est une phase liquide et la deuxième phase est une phase solide.

2. Bâtiment (25) de navigation sur l'eau suivant la revendication 1, dans lequel le circuit (4, 14) de refroidissement est prévu pour être alimenté en fraisil.

3. Bâtiment (25) de navigation sur l'eau suivant la revendication 1 ou 2, dans lequel le circuit (4, 14) de refroidissement a un conduit (9) de refroidissement du moyen (2, 3) de fonctionnement électrique.

4. Bâtiment (25) de navigation sur l'eau suivant l'une des revendications 1 à 3, dans lequel le circuit (4, 14) de refroidissement est couplé thermiquement à un circuit (14) de refroidissement primaire et le circuit (14) de refroidissement primaire a un conduit (9) de refroidissement du moyen (2, 3) de fonctionnement électrique.

5. Bâtiment (25) de navigation sur l'eau suivant l'une des revendications 1 à 4, dans lequel le dispositif (20) de refroidissement est prévu pour le refroidissement d'un onduleur (3).

6. Bâtiment (25) de navigation sur l'eau suivant l'une des revendications 1 à 5, dans lequel un producteur (8) de fraisil est prévu pour la production du fraisil (5), le producteur (6) de fraisil étant couplé thermiquement à un dispositif (13) de processus.

7. Bâtiment (25) de navigation sur l'eau à dispositif (1) de refroidissement suivant l'une des revendications 1 à 6, dans lequel il est prévu une installation de conditionnement de l'air pour la production du fraisil (5).

8. Procédé de refroidissement d'un moyen (2, 3) de fonctionnement électrique d'un bâtiment (25) de navigation sur l'eau, dans lequel on utilise un dispositif (1) de refroidissement, dans lequel le moyen (2, 3) de fonctionnement électrique est un moteur (2) électrique dans une nacelle (26) de propulsion, un générateur (2) électrique et/ou un onduleur (3), **caractérisé en ce que** l'on utilise comme fluide de refroidissement un réfrigérant liquide à deux phases, dans lequel la première phase est une phase liquide et la deuxième phase est une phase solide.

9. Procédé suivant la revendication 8, dans lequel on utilise comme fluide de refroidissement du fraisil (5) et on détermine un état du fraisil (5).

10. Procédé suivant la revendication 8 ou 9, dans lequel on détermine le remplissage d'un réservoir (13) de fraisil.

11. Procédé suivant la revendication 9 ou 10, dans lequel on produit du fraisil en fonction de la situation et en fonction de la puissance de refroidissement qui est nécessaire.
